# EUROPÄISCHE PATENTSCHRIFT

(11) **EP 0 761 800 B1**
(45) Veröffentlichungstag und Bekanntmachung des Hinweises auf die Patenterteilung: **16.10.2002**
(21) Anmeldenummer: 96113125.7
(22) Anmeldetag: 16.08.1996
(51) Int. Cl.: C10C 3/00, C04B 35/52, C01B 31/00

(54) **Verfahren zur Herstellung sinternder Polyaromatenmesophasen-Pulver**
Process for preparing sintered mesophase polyaromatic powder
Méthode de préparation de poudre de mésophase polyaromatique frittée

(30) Priorität: 08.09.1995 DE 19533190
(43) Veröffentlichungstag der Anmeldung: 12.03.1997
(73) Patentinhaber: Sintec Keramik GmbH & Co. KG., 87642 Buching (DE)
(72) Erfinder: Hüttinger, Klaus Jürgen, Prof. Dr., 76227 Karlsruhe (DE); Braun, Matthias, Dipl. Chem., 76135 Karlsruhe (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 4 312 396
- GSCHWINDT A ET AL: "Sintering of powders of polyaromatic mesophase to high-strength isotropic carbons-II. Influences of the synthesis conditions of the mesophases and the preparation of the powders" CARBON, 1994, UK, Bd. 32, Nr. 6, ISSN 0008-6223, Seiten 1105-1118, XP002050562
- BERNAUHER M. ET AL.: "Kinetics of mesophase formation in a stirred tank reactor and properties of the products-V. Catalysis by ferrocene" CARBON, 1994, UK, Bd. 32, Nr. 6, ISSN 0008-6223, Seiten 1073-1085, XP002050563
- CHEMICAL ABSTRACTS, vol. 82, no. 24, 16.Juni 1975 Columbus, Ohio, US; abstract no. 158497v, OI SHOICHI ET AL.: "Behavior of mesophase spherules formedin coal-tar pitch added ferrocene" XP002050564 & TANSO, Bd. 77, 1974, Seiten 61-63,
- CHEMICAL ABSTRACTS, vol. 85, no. 16, 18.Oktober 1976 Columbus, Ohio, US; abstract no. 110693r, OI SHOICHI ET AL.: "Influence of coexisting materials on the formation of carbonaceous mesophase in pitch. 3. Effect of ferrocene on nucleation and growth of mesophase" XP002050565 & TANSO, Bd. 85, 1976, Seiten 47-54,

## Beschreibung

Die Erfindung betrifft ein Verfahren zur Herstellung eines sinterfähigen Polyaromatenmesophasenpulvers gemäß dem Oberbegriff des Anspruchs 1. Mit dem so hergestellten Pulver lassen sich durch Sintern isotrope Feinkornkohlenstoffe mit überragenden mechanischen Eigenschaften herstellen.

Das Sintern von Pulvern aus Polyaromatenmesophase zu hochfesten, isotropen Kohlenstoffen ist in der Literatur detailliert beschrieben [1]. Für verschiedene Verfahren zur Herstellung sinternder Pulver und gesinterter Kohlenstoffe ist Patentschutz beantragt [2-4]. In [2] ist Ausgangsmaterial ein mit Hilfe von HF/ BF₃ auf katalytischem Wege hergestelltes "Mesophasenpech"; dabei handelt es sich nicht um die klassische Brooks und Taylor-Mesophase (= Polyaromatenmesophase), sondern um ein optisch anisotropes Gel [5], gekennzeichnet durch höhere Wasserstoffgehalte, geringere Dichte und geringere Koksausbeute als sie die klassische Polyaromatenmesophase nach Brooks und Taylor aufweist. Beansprucht wird ein "Mesophasenpech" mit mindestens 70%, vorzugsweise jedoch 100% optischer Anisotropie, d.h. es handelt sich um Bulk- (Volumen-) "Mesophase". Diese wird zerkleinert (d≤100µm) und bei Temperaturen über 170°C in oxidierender Atmosphäre behandelt; die Herstellung des sinternden Pulvers ist beendet.
In [3] ist Ausgangsmaterial ein klassisches Polyaromatenmesophasen-Pech mit einem Mesophasengehalt (anisotroper Anteil) von mindestens 75%, vorzugsweise 90%. Hierbei kann es sich ebenfalls nur um Bulk- (Volumen-) Mesophase handeln. Dieses wird wie in [2] zerkleinert, jedoch auf eine Korngröße d≤10µm und anschließend in oxidierender Atmosphäre behandelt, womit die Herstellung des sinternden Pulvers abgeschlossen ist.
In [4] sind Ausgangsmaterialien für die Herstellung eines sinternden Polyaromatenmesophasen-Pulvers sogenannte Mesocarbon-Microbeads. Bei diesen handelt es sich um kleinste Polyaromatenmesophasen-Sphärolithe mit Durchmessern von nur einigen Mikrometern. Aufgrund der geringen Größe der Teilchen sind Zerkleinerungsprozesse nicht erforderlich; gegebenenfalls wird gesichtet. Allerdings lassen sich Mesocarbon-Microbeads nur bei einer äußerst geringen Konversion des Ausgangsmaterials (Teer) zu Mesocarbon-Microbeads herstellen, schätzungsweise maximal 10-15%, wodurch der gesamte Prozeß wegen des großen Aufwandes für die Abtrennung der isotropen Phase äußerst unwirtschaftlich erscheint.
In allen zitierten Patenten werden Biegefestigkeitswerte mitgeteilt; der Maximalwert der Biegefestigkeit aller zitierten Anmeldungen beträgt nach Sintern bei 1300°C 152 MPa [2].

In [6] wurden grundlegende, vergleichende Untersuchungen zur Einigung von Bulk-(Volumen-) Mesophase und sphärolithischer Mesophase zur Herstellung von sinternden Poyaromatenmesophase-Pulvern unter Einsatz von Petrolpechen durchgeführt. In dieser Studie wurde eindeutig gefunden, daß mit sphärolithischer Mesophase als Ausgangsmaterial wesentlich bessere mechanische Eigenschaften der gesinterten Kohlenstoffe erzielt werden können als mit Bulk- (Volumen-) Mesophase. Das Problem bei der Umsetzung dieser Erkenntnis besteht jedoch darin, daß daß sich bei der Pyrolyse von üblichen technischen Kohlenwasserstoffgemischen auf der Basis von Petrolpechen bereits nach relativ geringer Konversion der Peche in Mesophase Bulk-(Volumen-) Mesophase bildet, wobei bei der anschließenden Behandlung unter oxidierender Atmosphäre Temperaturen von wenigstens etwa 200°C erforderlich sind.

Aufgrund der Bildung von Bulk-(Volumen-) Mesophase muß auch bei der Synthese von Mesocarbon-Microbeads nach [4] die Pyrolyse im früheren Stadium abgebrochen werden muß. Wie bereits erwähnt, ist dieser Rohstoff für die Herstellung eines sinterfähigen Polyaromatenmesophasen-Pulvers wegen des hohen Trennaufwandes unwirtschaftlich.

Es mußte deshalb ein Lösungsweg bzw. eine Synthese gefunden werden, bei der sich ein Polyaromatenmesophasen-Pech mit möglichst hohem Gehalt an Mesophasen-Sphärolithen ergibt.

In der Patentschrift [7] wurde eine katalysierte Pyrolyse von Pechen beschrieben, bei der unter anderem Mesophasen-Peche mit hohen Gehalten an sphärolithischer Mesophase entstehen. Der Katalysator ist Eisen, das in situ durch Zersetzung geeigneter Eisen-Komplexe, die vor der Pyrolyse in dem Pech gelöst werden, gebildet wird.

Aufbauend auf diesen Erkenntnissen liegt der Erfindung die Aufgabe zugrunde, ein Verfahren der eingangs genannten Art dahingehend weiterzubilden, daß sich bei der Synthese des Polyaromatenmesophasen-Peches ein möglichst hoher Gehalt an Polyaromatenmesophasen-Sphärolithen ergibt, welcher auf einfache und kostengünstige Weise zu dem sinterfähigen Polyaromatenmesophasenpulver weiterverarbeitet wird.

Erfindungsgemäß wird diese Aufgabe bei einem gattungsgemäßen Verfahren zur Herstellung eines sinterfähigen Polyaromatenmesophasenpulvers dadurch gelöst, daß als Polyaromatenmesophasen-Ausgangsstoff zur Synthese des sphärolithischen Polyaromatenmesophasen-Peches ein Steinkohlenteerpech eingesetzt wird, und daß der vorwiegend aus optisch anisotropen Polyaromatenmesophasen-Sphärolithen bestehende Rückstand bei Temperaturen von ≤ 170°C unter oxidierender Atmosphäre behandelt wird.

Eine sphärolithische Polyaromatenmesophase dieser Art approximiert eine Bulk-(Volumen-) Mesophase, ist dieser aber in bezug auf die Sintereigenschaften der daraus herstellbaren Pulver weit überlegen. Bei den durchgeführten Untersuchungen hat sich neben Ferrocen vor allem Eisen-(III)-benzoat als im Sinne der Zielsetzung überragende Eisen-Ausgangsverbindung erwiesen. Diese Verbindung besitzt gegenüber Ferrocen aufgrund des zu erwartenden wesentlich günstigeren Preises erhebliche wirtschaftliche Vorteile; sie ist kommerziell nicht erhältlich, jedoch durch einfache Reaktion aus Eisen-(III)-chlorid und Benzoesäure, also äußerst günstigen, großtechnischen Ausgangsstoffen herstellbar. Überraschenderweise zeigt Eisen-(III)-naphthoat nicht dieselben Eigenschaften in bezug auf die Bildung von sphärolithischer Mesophase wie Eisen-(III)-benzoat; mit diesem Eisen-Komplex bildet sich Bulk-(Volumen-) Mesophase bereits bei ähnlich geringen Gehalten wie mit dem reinen Pech. Als geeignet hat sich auch Eisen-(III)-acetylacetonat, als beschränkt geeignet hat sich Eisen-(III)-naphthenat erwiesen. Sein Vorteil liegt in der Preiswürdigkeit. Eisen-(III)-acetylacetonat ist dagegen ähnlich teuer wie Ferrocen. Demnach bleibt festzuhalten, daß mit Ferrocen, Eisen-(III)-benzoat und Eisen-(III)-acetylacetonat sich eine Konversion des Peches in sphärolithische Mesophase mit Sphärolithen-Gehalten größer 40 bis 60% erzielen läßt, ohne das jegliche Koaleszenz der Sphärolithe zu Bulk- (Volumen-) Mesophase einsetzt. Die Polyaromatenmesophasen-Sphärolithe besitzen im übrigen eindeutig Eigenschaften der klassischen Brooks und Taylor-Mesophase.
Eine eindeutige Charakterisierung einer Polyaromatenmesophase über die im Polarisationsmikroskop erkennbare Mikrostruktur hinaus ist derzeit ebenso nicht möglich wie die Vorhersage der Sintereigenschaften aufgrund von Eigenschaften oder Eigenschaftsmerkmalen, auch wenn dies zum Teil in der Patentliteratur versucht wurde. Zudem wird die Polyaromatenmesophase bis zur Herstellung eines geeigneten sinternden Pulvers weiteren Behandlungsschritten unterzogen, die das Sinterverhalten zusätzlich beeinflussen können. Tatsache ist, daß die Sintereigenschaften jedoch vorwiegend durch die Qualität bzw. die Eigenschaften der Polyaromatenmesophase, aus der das sinternde Pulver hergestellt wird, vorbestimmmt sind [6]. Sie lassen sich demzufolge nur am gesinterten Körper bzw. dessen mechanischen Eigenschaften erkennen.

Es wurden deshalb umfangreiche Untersuchungen durchgeführt, um diese Sintereigenschaften der mit Hilfe der Eisen-Katalyse hergestellten Polyaromatenmesophase zu analysieren. Bei diesen Untersuchungen wurde stets wie folgt vorgegeben: Vermischen des flüssigen Polyaromatenmesophasen-Ausgangsstoffes in Form einen Steinkohlenteerpeches mit dem organischen Eisenkomplex zum Lösen desselben im Polyaromatenmesophasen-Ausgangsstoff, Pyrolyse des Edukt-Gemisches unter solchen Bedingungen von Druck, Temperatur und Zeit, daß ein Polyaromatenmesophasen-Pech mit einem maximalen Gehalt an Mesophasen-Sphärolithen entsteht, nach Abkühlen Grobzerkleinerung des Reaktionsproduktes auf eine Korngröße d ≤ 100 µm zwecks Herauslösen des überwiegenden Anteils an isotropem Pech mit Hilfe eines geeigneten Lösungsmittels, Behandlung des nach der Extraktion anfallenden Pulvers in oxidierender Atmosphäre, vorzugsweise mit Luft oder Sauerstoff, bei höchstens 170°C und Endzerkleinerung auf die gewünschte Korngröße des sinterfähigen Pulvers. Es wurde gefunden, daß an der Reihenfolge der Behandlungsschritte entscheidend ist, daß die Feinzerkleinerung auf die Endkorngröße des sinterfähigen Pulvers nach der Behandlung in oxidierender Atmosphäre erfolgt.

Nach diesem Verfahren wurden Maximalwerte der Biegefestigkeit nach Sintern bei 1300°C von über 225 MPa erreicht. Dies bedeutet im Vergleich zu den in der Patentliteratur mitgeteilten Maximalwerten der Biegefestigkeit eine Steigerung von etwa 50%, wodurch die Überlegenheit des erfindungsgemäßen Verfahrens eindeutig unterstrichen wird.
Die nachfolgenden Beispiele sollen das erfindungsgemäße Verfahren erläutern.

### Beispiel 1

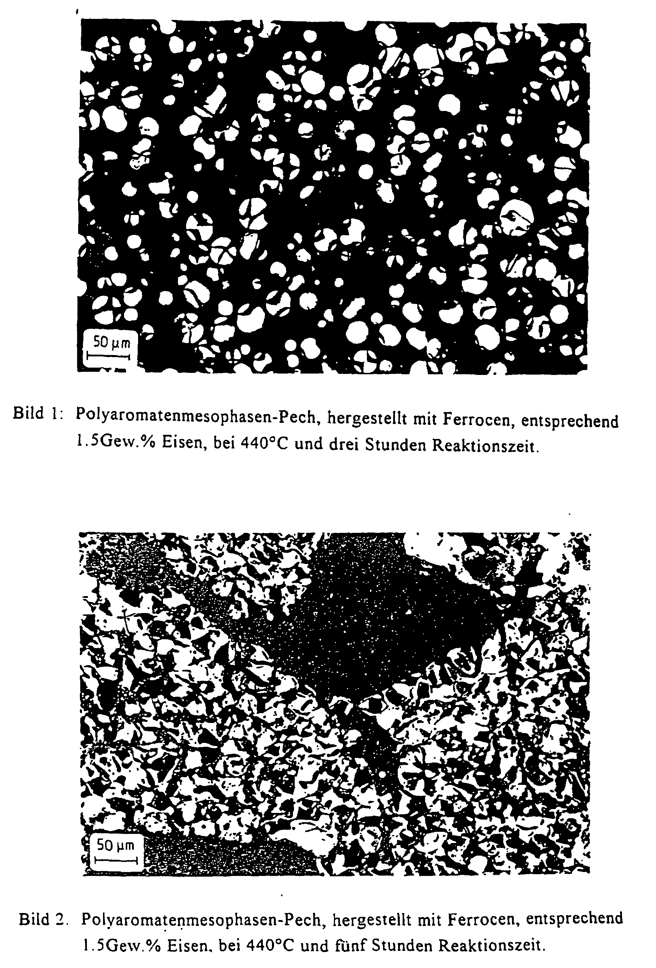

Eine Mischung aus 285g eines filtrierten Steinkohlenteerpeches mit einem Erweichungspunkt nach Mettler von 102°C und 15g Ferrocen, entsprechend einem Eisen-Gehalt von 1.5%, wurde im Rührkesselreaktor unter einem Argon-Inertgasdruck von 1MPa bei 440°C zwei, drei und fünf Stunden pyrolysiert. Der Gehalt an Mesophasen-Sphärolithen des erhaltenen Polyaromatenmesophasen-Peches wurde anhand polarisationsmikroskopischer Aufnahmen ermittelt. Es wurden folgende Gehalte gefünden: zwei Stunden, 40 Vol.% Mesophase; drei Stunden, 50 Vol.% Mesophase; fünf Stunden, 65 Vol.% Mesophase. Die Bilder 1 und 2 zeigen Schliffbilder der nach drei und fünf Stunden erhaltenen Produkte. Erst nach fünf Stunden erkennt man eine dichte Packung der Sphärolithe, jedoch keine Koaleszenz in dem Maße, wie sie bei der Pyrolyse eines reinen Peches beobachtet wird.
Das nach drei Stunden erhaltene Polyaromatenmesophasen-Pech wurde auf eine Korngröße d≤100µm zerkleinert und mit siedendem Tetrahydrofuran unter Rückfluß extrahiert. Der erhaltene Rückstand wurde nach Trocknung bei 160°C 70 Minuten mit Luft in einem durchströmten Festbettreaktor behandelt. Nach dieser Behandlung ergab sich mit dem in [8] beschriebenen Penetrationstest ein Penetrationswert von 22%. Das Produkt wurde mit einer Strahlmühle unter Verwendung von trockener und ölfreier Luft auf eine Korngröße d≤10µm zerkleinert.
Dieses Pulver wurde mit einem Druck von 125MPa zu zylindrischen Körpern von 30mm Durchmesser und 10mm Höhe gepreßt; anschließend erfolgte Sinterung in einem mit Inertgas durchströmten Rohrofen bis 1300°C. Die Aufheizgeschwindigkeit bis 1000°C betrug 0.2K/min, zwischen 1000°C und 1300°C 1K/min. Nach fünf Stunden Haltezeit wurden die Proben abgekühlt. Die Körperdichte betrug 1.83g/cm³, die Biegebruchfestigkeit 201MPa.

### Beispiel 2

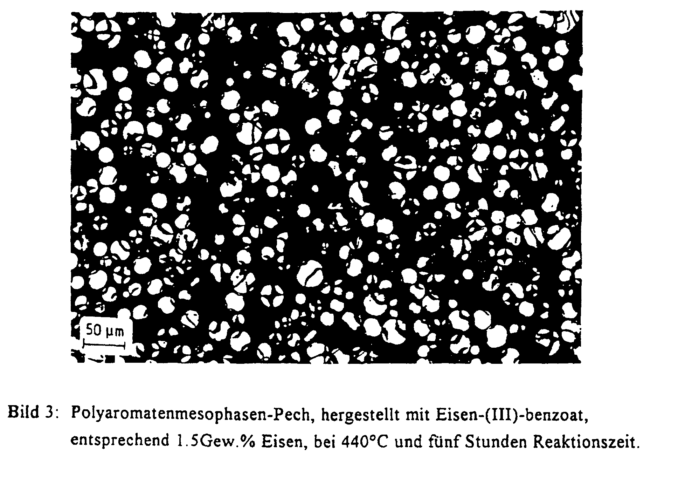

Eine Mischung aus 272g obigen Steinkohlenteerpeches und 28g Eisen-(III)-benzoat wurde wie oben angegeben pyrolysiert, allerdings mit einer Versuchsdauer von fünf Stunden. Es wurde ein Mesophasen-Gehalt von 50 Vol.% ermittelt, Bild 3. Nach Zerkleinerung und Extraktion wie in Beispiel 1 beschrieben wurde das Pulver wiederum bei 160°C mit Luft behandelt. Nach 85 Minuten ergab sich ein Pulver, das nach dem in [8] beschriebenen Test eine relative Penetration von 18% aufwies. Hiernach erfolgte die Zerkleinerung auf eine Korngröße d≤10µm, wie in Beispiel 1. Dieses Pulver wurde zunächst mit einem Druck von 100MPa wie in Beispiel 1 zu zylindrischen Körpern gepreßt. Diese wurden bis 1300°C gesintert; die Aufheizgeschwindigkeit bis 1000°C betrug 1K/min, von 1000°C bis 1300°C 2K/min. Die resultierenden Körper wiesen eine Dichte von 1.84g/cm³ auf und ergaben eine Biegebruchfestigkeit von 192MPa.
Dasselbe Pulver wurde mit einem Druck von 125MPa zu zylindrischen Formkörpern verpreßt, die wie in Beispiel 1 beschrieben bis 1300°C gesintert wurden. Hiernach ergab sich eine Dichte von nur 1.83g/cm³, aber eine Biegebruchfestigkeit von 225MPa. Die Ergebnisse zeigen, daß die Dichte eines Körpers keineswegs ein Maß für dessen Festigkeit ist.

### Beispiel 3

Anstelle eines filtrierten Steinkohlenteerpeches mit einem Erweichungspunkt von 102°C nach Mettler wurde ein filtriertes Steinkohlenteerpech mit einem Erweichungspunkt von 70°C verwendet. In 272g dieses Peches wurden 28g Eisen-(III)-benzoat gelöst; die Pyrolyse des Gemisches erfolgte wie in Beispiel 2. Gleiches gilt für die weiteren Behandlungsschritte. Die Behandlung der extrahierten Mesophasen-Sphärolithe mit Luft erfolgte bei 160°C, 78 Minuten. Mit Hilfe des Penetrationstests wurde eine relative Penetration von 20% ermittelt. Das Pulver wurde wie in Beispiel 1 und 2 zerkleinert, mit 125MPa verdichtet und wie in Beispiel 1 beschrieben gesintert. Nach dem Sintern wurden eine Dichte von 1.84g/cm³ und eine Biegebruchfestigkeit von 215MPa ermittelt.

### Referenzen

- [1]: W. R. Hoffmann, K. J. Hüttinger, *Carbon* **32** (1994), 1087-1103.
- [2]: EP 0 575 748 A1
- [3]: EP 0 283 211 A2
- [4]: EP 0 552 371 A1
- [5]: K. Lafdi, S. Bonnamy, A. Oberlin, *Carbon* **29** (1991), 831-847, 849-855, 857-864.
- [6]: A. Gschwindt, K. J. Hüttinger,*Carbon* **32** (1994), 1105-1118.
- [7]: DE 43 12 396
- [8]: W. R. Hoffmann, K. J. Hüttinger, *Carbon* **31** (1993), 259-262.
- [9]: J. R. Hildebrand, R. I. Scott, The solubility of non electrolytes, 3rd Edition, Reinhold Publ. Corp.

## Patentansprüche

1. Verfahren zur Herstellung eines sinterfähigen Polyaromatenmesophasenpulvers, wobei
(a) ein sphärolithisches Polyaromatenmesophasen-Pech durch katalysierte Pyrolyse von aromatischen Kohlenwasserstoffen bzw. Kohlenwasserstoffgemischen, wie Pechen, in welchen ein Katalysatorausgangsstoff in Form eines organischen Eisenkomplexes vor der Pyrolyse gelöst wird, synthetisiert wird,
(b) das Polyaromatenmesophasen-Pech auf eine Korngröße d ≤ 100 µm grobzerkleinert und die optisch isotrope Pechphase des sphärolithischen Polyaromatenmesophasen-Peches mit einem Lösungsmittel oder Lösungsmittelgemisch, welches einen Löslichkeitsparameter nach Hildebrand [9] von größer als 8 (9,1 entspricht Tetrahydrofuran) aufweist, extrahiert wird,
(c) der vorwiegend aus optisch anisotropen Polyaromatenmesophasen-Sphärolithen bestehende Rückstand unter oxidierender Atmosphäre behandelt wird und
(d) der unter oxidierender Atmosphäre behandelte Rückstand auf eine Teilchengröße d ≤ 10 um zerkleinert wird,
**dadurch gekennzeichnet, daß** als Polyaromatenmesophasen-Ausgangsstoff zur Synthese des sphärolithischen Polyaromatenmesophasen-Peches (Schritt a) ein Steinkohlenteerpech eingesetzt wird, und daß der vorwiegend aus optisch anisotropen Polyaromatenmesophasen-Sphärolithen bestehende Rückstand (Schritt c) bei Temperaturen von ≤ 170°C unter oxidierender Atmosphäre behandelt wird.

2. Verfahren nach Anspruch 1, **dadurch gekennzeichnet, daß** Druck, Temperatur und Reaktionszeit der Pyrolysereaktion derart gesteuert werden, daß ein maximaler Gehalt an Polyaromatenmesophasen-Sphärolithen resultiert, aber keinerlei Koaleszenz zu Bulk-(Volumen-) Mesophase einsetzt, in jedem Fall jedoch ein Gehalt an Polyaromatenmesophasen-Sphärolithen von wenigstens 40 Vol.% erhalten wird.

3. Verfahren nach Anspruch 1 oder 2, **dadurch gekennzeichnet, daß** die Pyrolyse in einem diskontinuierlichen Rührreaktor durchgeführt wird.

4. Verfahren nach Anspruch 1 oder 2, **dadurch gekennzeichnet, daß** die Pyrolyse in einem kontinuierlichen Rohrreaktor mit rotierenden Einbauten durchgeführt wird.

5. Verfahren nach einem der Ansprüche 1 bis 4, **dadurch gekennzeichnet, daß** als Polyaromatenmesophasen-Ausgangsstoff zur Synthese des sphärolithischen Polyaromatenmesophasen-Peches ein gefiltertes Steinkohlenteerpech eingesetzt wird.

6. Verfahren nach einem der Ansprüche 1 bis 5, **dadurch gekennzeichnet, daß** als organischer Eisenkomplex Ferrocen eingesetzt wird.

7. Verfahren nach einem der Ansprüche 1 bis 5, **dadurch gekennzeichnet, daß** als organischer Eisenkomplex Eisen-(III)-benzoat eingesetzt wird.

8. Verfahren nach einem der Ansprüche 1 bis 5, **dadurch gekennzeichnet, daß** als organischer Eisenkomplex Eisen-(III)-acetylacetonat eingesetzt wird.

9. Verfahren nach einem der Ansprüche 1 bis 5, **dadurch gekennzeichnet, daß** als organischer Eisenkomplex Eisen-(III)-naphthenat eingesetzt wird.

10. Verfahren nach einem der Ansprüche 1 bis 9, **dadurch gekennzeichnet, daß** der organische Eisenkomplex in einer solchen Menge dem Polyaromatenmesophasen-Ausgangsstoff zugegeben wird, daß der Eisengehalt mindestens 0,2 Gew.% beträgt.

11. Verfahren nach einem der Ansprüche 1 bis 10, **dadurch gekennzeichnet, daß** der organische Eisenkomplex in einer solchen Menge dem Polyaromatenmesophasen-Ausgangsstoff zugegeben wird, daß der Eisengehalt 0,5 bis 1,5 Gew.% beträgt.

12. Verfahren nach einem der Ansprüche 1 bis 11, **dadurch gekennzeichnet, daß** die Extraktion mit siedendem Tetrahydrofuran durchgeführt wird und der Tetrahydrofuran-Gehalt derart eingestellt wird, daß er mindestens dem zehnfachen Gehalt an isotroper Pechphase entspricht.

13. Verfahren nach einem der Ansprüche 1 bis 11, **dadurch gekennzeichnet, daß** die Extraktion mit nicht siedendem Teeröl durchgeführt wird und der Teeröl-Gehalt derart eingestellt wird, daß er mindestens dem fünffachen Gehalt an isotroper Pechphase entspricht.

14. Verfahren nach einem der Ansprüche 1 bis 13, **dadurch gekennzeichnet, daß** der Extraktionsrückstand bei Temperaturen von ≤ 170°C mit Sauerstoff oder Luft behandelt wird.

15. Verfahren nach einem der Ansprüche 1 bis 14, **dadurch gekennzeichnet, daß** die Endmahlung des unter oxidierender Atmosphäre behandelten Extraktionsrückstandes auf eine Teilchengröße d ≤ 10 um mittels einer Strahlmühle unter Einsatz eines trockenen und ölfreien Gases durchgeführt wird.

## Claims

1. Process for producing a sinterable polyaromatic mesophase powder, in which
(a) a spherulytic polyaromatic mesophase pitch is synthesized by catalyzed pyrolysis of aromatic hydrocarbons or hydrocarbon mixtures, such as pitches, in which a catalysts starting material in the form of an organic iron complex is dissolved prior to pyrolysis,
(b) the polyaromatic mesophase pitch is coarsely crushed to a particle size d ≤ 100 µm and the optically isotropic pitch phase of the spherulytic polyaromatic mesophase pitch is extracted with a solvent or solvent mixture, which has a solubility parameter according to Hildebrand [9] of higher than 8 (9.1 equals tetrahydrofuran),
(c) the residue mainly consisting of optically anisotropic polyaromatic mesophase spherulites is treated under an oxidizing atmosphere and
(d) the residue treated under an oxidizing atmosphere is comminuted to a particle size d ≤ 10 µm,
**characterized in that** the polyaromatic mesophase starting material for the synthesis of the spherulytic polyaromatic mesophase pitch (step a) is a coal tar pitch and that the residue mainly consisting of optically anisotropic polyaromatic mesophase spherulites (step c) is treated at temperatures of ≤ 170°C under an oxidizing atmosphere.

2. Process according to claim 1, **characterized in that** the pressure, temperature and reaction time of the pyrolysis reaction are controlled in such a way that there is a maximum content of polyaromatic mesophase spherulites, but there is no coalescence to bulk (volume) mesophase and always a polyaromatic mesophase spherulite content of at least 40 vol.% is obtained.

3. Process according to claim 1 or 2, **characterized in that** pyrolysis is performed in a discontinuous stirring reactor.

4. Process according to claim 1 or 2, **characterized in that** pyrolysis is performed in a continuous tubular reactor with rotating fittings.

5. Process according to one of the claims 1 to 4, **characterized in that** a filtered coal tar pitch is used as the polyaromatic mesophase starting material for the synthesis of the spherulytic polyaromatic mesophase pitch.

6. Process according to one of the claims 1 to 5, **characterized in that** ferrocene is used as the organic iron complex.

7. Process according to one of the claims 1 to 5, **characterized in that** iron-(III)-benzoate is used as the organic iron complex.

8. Process according to one of the claims 1 to 5, **characterized in that** iron-(III)-acetyl acetonate is used as the organic iron complex.

9. Process according to one of the claims 1 to 5, **characterized in that** iron-(III)-naphthenate is used as the organic iron complex.

10. Process according to one of the claims 1 to 9, **characterized in that** the organic iron complex is added to the polyaromatic mesophase starting material in a quantity such that the iron content is at least 0.2 wt.%.

11. Process according to one of the claims 1 to 10, **characterized in that** the organic iron complex is added to the polyaromatic mesophase starting material in a quantity such that the iron content is 0.5 to 1.5 wt.%.

12. Process according to one of the claims 1 to 11, **characterized in that** extraction takes place with boiling tetrahydrofuran and the tetrahydrofuran content is adjusted in such a way that it corresponds to at least ten times the isotropic pitch phase content.

13. Process according to one of the claims 1 to 11, **characterized in that** extraction is performed with non-boiling tar oil and the tar oil content is adjusted in such a way that it corresponds to at least five times the isotropic pitch phase content.

14. Process according to one of the claims 1 to 13, **characterized in that** the extraction residue is treated with oxygen or air at temperatures of ≤ 170°C.

15. Process according to one of the claims 1 to 14, **characterized in that** the final grinding of the extraction residue treated under an oxidizing atmosphere to a particle size d ≤ 10 µm takes place by means of a jet mill using a dry, oil-free gas.

## Revendications

1. Procédé de préparation de poudre de mésophase polyaromatique susceptible de fritter, dans lequel :
a) on synthétise une poix sphérolitique de mésophase polyaromatique par pyrolyse catalysée d'hydrocarbures aromatiques ou de mélanges d'hydrocarbures, tels que des poix, dans lesquelles on dissout avant la pyrolyse un produit de départ de catalyseur sous la forme d'un complexe organique à base de fer,
b) la poix de mésophase polyaromatique est grossièrement réduite en grains d'une dimension d ≤ 100 µm et l'on extrait la phase de poix optiquement isotrope de la poix sphérolotique de mésophase polyaromatique à l'aide d'un solvant ou d'un mélange de solvants dont le paramètre de solubilité selon Hildebrand [9] est supérieur à 8 (9,1 correspond au tétrahydrofuranne),
c) on traite le résidu consistant essentiellement en sphérolites de mésophase polyaromatique optiquement anisotropes sous une atmosphère oxydante et,
d) on réduit le résidu traité sous atmosphère oxydante en particules d'une dimension d ≤ 10 µm,
**caractérisé en ce que** l'on utilise comme produit de départ de mésophase polyaromatique pour la synthèse de la poix sphérolitique de mésophase polyaromatique (étape a) un brai de goudron de houille, et **en ce que** l'on traite le résidu consistant essentiellement en sphérolites de mésophase polyaromatique optiquement anisotropes (étape c) sous une atmosphère oxydante à des températures ≤ 170°C.

2. Procédé selon la revendication 1, **caractérisé en ce que** la pression, la température et le temps de réaction de la réaction de pyrolyse sont contrôlés de telle manière qu'on obtienne une teneur maximale en sphérolites de mésophase polyaromatique, mais qu'il ne se produise pas de coalescence pour l'obtention de mésophases volumineuses, et qu'on obtienne néanmois dans tous les cas une teneur en sphérolites de mésophase polyaromatique d'au moins 40 % en volume.

3. Procédé selon la revendication 1 ou 2, **caractérisé en ce que** la pyrolyse est effectuée de façon discontinue dans un réacteur à agitateur.

4. Procédé selon la revendication 1 ou 2, **caractérisé en ce que** la pyrolyse est effectuée en continu dans un réacteur tubulaire à chicanes rotatives.

5. Procédé selon l'une quelconque des revendications 1 à 4, **caractérisé en ce que** l'on utilise comme produit de départ de mésophase polyaromatique pour la synthèse de la poix sphérolitique de mésophase polyaromatique un brai de goudron de houille filtré.

6. Procédé selon l'une quelconque des revendications 1 à 5, **caractérisé en ce que** l'on utilise comme complexe organique à base de fer du ferrocène.

7. Procédé selon l'une quelconque des revendications 1 à 5, **caractérisé en ce que** l'on utilise comme complexe organique à base de fer du benzoate ferrique.

8. Procédé selon l'une quelconque des revendications 1 à 5, **caractérisé en ce que** l'on utilise comme complexe organique à base de fer de l'acétylacétonate ferrique.

9. Procédé selon l'une quelconque des revendications 1 à 5, **caractérisé en ce que** l'on utilise comme complexe organique à base de fer du naphténate ferrique.

10. Procédé selon l'une quelconque des revendications 1 à 9, **caractérisé en ce que** le complexe organique à base de fer est ajouté au produit de départ de mésophase polyaromatique dans une quantité telle que la teneur en fer représente au moins 0,2 % du poids.

11. Procédé selon l'une quelconque des revendications 1 à 10, **caractérisé en ce que** le complexe organique à base de fer est ajouté au produit de départ de mésophase polyaromatique dans une quantité telle que la teneur en fer représente au moins 0,5 à 1,5 % du poids.

12. Procédé selon l'une quelconque des revendications 1 à 11, **caractérisé en ce que** l'extraction est réalisée en utilisant du tétrafydrofuranne bouillant et **en ce que** la teneur en tétrahydrofuranne est ajustée de telle façon qu'elle corresponde à au moins dix fois la teneur en phase de poix isotrope.

13. Procédé selon l'une quelconque des revendications 1 à 11, **caractérisé en ce que** l'extraction est réalisée en utilisant de la créosote non bouillante et **en ce que** la teneur en créosote est ajustée de telle façon qu'elle corresponde à au moins cinq fois la teneur en phase de poix isotrope.

14. Procédé selon l'une quelconque des revendications 1 à 13, **caractérisé en ce que** le résidu d'extraction est traité par de l'oxygène ou de l'air à des températures ≤ 170°C.

15. Procédé selon l'une quelconque des revendications 1 à 14, **caractérisé en ce que** la pulvérisation finale du résidu d'extraction traité sous atmosphère oxydante à une taille de particule d ≤ 10 µm est réalisée au moyen d'un pulvérisateur à jet en utilisant un gaz sec et sans huile.
